# FASCICULE DE BREVET EUROPEEN

(11) **EP 0 487 042 B1**
(45) Date de publication et mention de la délivrance du brevet: **19.03.1997**
(21) Numéro de dépôt: 91119750.7
(22) Date de dépôt: 19.11.1991
(51) Int. Cl.: H04Q 11/04

(54) **Commutateur temporel à architecture éclatée et module de raccordement pour la constitution d'un tel commutateur**
Zeitmultiplexkoppelanordnung mit verteilter Architektur und einem Verbindungsmodul zur Bildung dieser Anordnung
Time switch with a distributed architecture and module for making such a switch

(30) Priorité: 21.11.1990 FR 9014525
(43) Date de publication de la demande: 27.05.1992
(73) Titulaire: ALCATEL BUSINESS SYSTEMS, F-75008 Paris (FR)
(72) Inventeur: Hoff, Jean, F-67700 Saint Jean Saverne (FR); Graouer, René, F-67100 Strasbourg (FR)
(74) Mandataire: Weinmiller, Jürgen

(56) Documents cités:
- EP-A- 0 184 774
- FR-A- 2 119 417
- INTERNATIONAL SWITCHING SYMPOSIUM, Kyoto, 25-29 octobre 1976, vol. 1, session 231-3, pages 1-6; I. ANDERSSON et al.: "HUGIN - a high speed unibus group selector for integrated digital networks"

## Description

L'invention concerne un commutateur temporel à structure éclatée et un module de raccordement pour la constitution d'un tel commutateur.

Le développement des techniques numériques pour le traitement d'informations de toutes natures et la mise en place de réseaux de télécommunications permettant la transmission, à haut débit, d'informations numérisées, a conduit à la création d'un grande variété de terminaux de communication qui sont prévus pour se raccorder à un même type de réseau de télécommunications pour y transmettre conjointement et sous des formes numériques déterminées des informations de natures éventuellement très différentes.

Cette variété de nature des informations ainsi que celle des besoins des utilisateurs, pour des informations de même nature, conduit à concevoir et réaliser des réseaux de télécommunications permettant la présence et les communications simultanées de terminaux ayant des caractéristiques en matière de transmission qui nécessairement compatibles, soient éventuellement très différentes, notamment en matière de débit.

Dans une forme de réalisation connue, les réseaux de télécommunications, de type téléphonique, sont constitués à l'aide de commutateurs temporels reliés entre eux par des liaisons multiplexes temporelles normalisées, notamment en application de la recommandation G.704 du Comité Consultatif International Télégraphique et Téléphonique (CCITT).

Cette recommandation définit différentes structures de trame synchrone destinées à permettre le transfert de signaux numériques arrangés sous forme d'octets, elle prévoit en particulier une structure de trame autorisant un débit de 2,048 Mb/s sur une liaison unidirectionnelle au moyen de trente deux canaux isochrones. Chaque canal correspond à un intervalle de temps de même rang déterminé au cours de chacune des trames successives rythmant l'exploitation synchrone d'une liaison, la périodicité des trames étant de 125 µs.

Dans une forme de réalisation classique, d'une part, toutes les entrées des commutateurs temporels sont conçues pour recevoir une liaison multiplexe temporelle, telle qu'évoquée ci-dessus et il en est de même pour toutes les sorties, d'autre part, la structure de commande d'un commutateur est prévue en tenant compte du nombre de voies prévues par liaison selon la normalisation.

Ceci présente l'inconvénient de ne pas toujours permettre une exploitation optimale d'un commutateur dès que les besoins en nombre de canaux des liaisons et terminaux raccordés à ses ports sont disparates, l'allocation des canaux disponibles n'étant pas totalement libre.

Ainsi, le document FR-A-2119417 décrit un commutateur temporel modulaire dont l'exploitation synchrone est temporellement partagée entre des modules de raccordement d'équipement reliés à un bus de données et synchronisés par une unité commune. Chaque module y est doté d'une mémoire associative qui permet d'émettre et de recevoir des données selon des structures de trame différentes au cours d'intervalles de temps sur le bus de données et sur une liaison multiplexe temporelle reliant ce module aux équipements qu'il dessert.

L'invention propose aussi un commutateur temporel commutateur comportant un bus de données dont l'exploitation synchrone est temporellement partagée entre des modules de raccordement d'équipement qui sont reliés à ce bus de données et qui sont de type à mémoire associative programmée, de manière à d'une part émettre et d'autre part recevoir des données selon des structures différentes de trame au cours d'intervalles de temps, définis en nombre et positions temporelles, sur le bus de données et sur une liaison multiplexe temporelle particulière reliant le module de raccordement considéré à l'équipement qu'il dessert.

Selon une caractéristique de l'invention, chaque module de raccordement d'équipement est doté de deux mémoires associatives respectivement destinées l'une aux émissions de la liaison multiplexe temporelle particulière, desservie par le module considéré, vers le bus de données et l'autre aux émissions en sens inverse, chacune de ces mémoires associatives comportant identiquement deux unités de sélection d'intervalles de temps qui sont instruites, via un bus auxiliaire de signalisation, par un agencement de commande de type connu associant au moins un processeur et une horloge pour le pilotage du commutateur, et qui sont actionnées chacune par un compteur différent, le compteur de l'une étant piloté par les signaux d'horloge en vigueur sur le bus de données, alors que le compteur de l'autre est piloté par les signaux d'horloge en vigueur sur la liaison particulière desservie, chaque mémoire associative comportant de plus une unité tampon de données insérée entre la liaison particulière desservie et le bus de données et sélectivement commandée par chacune des unités de sélection de cette mémoire associative, soit en écriture, soit en lecture suivant le sens d'émission considéré.

L'invention propose aussi un module de raccordement pour commutateur temporel tel que défini ci-dessus.

Selon une caractéristique de l'invention, chaque module comporte deux mémoires associatives respectivement destinées l'une aux émissions du module vers le bus de données et l'autre aux émissions vers ledit module au travers de ce bus de données, ces deux mémoires comportant chacune et identiquement deux unités de sélection d'intervalles de temps instruites par l'agencement de commande et actionnées chacune par un compteur différent qui est piloté par les signaux d'horloge en vigueur sur le bus de données pour l'une et par les signaux d'horloge en vigueur sur la liaison multiplexe particulière desservie pour l'autre, ainsi qu'une unité tampon de données insérée entre la liaison multiplexe temporelle particulière desservie et le bus de données et sélectivement commandée par chaque unité de sélection, soit en écriture, soit en lecture suivant le sens d'émission considéré.

L'invention, ses caractéristiques et ses avantages sont précisés dans la description qui suit, en liaison avec les figures répertoriées ci-dessous.

La figure 1 présente un schéma de principe d'un système à commutateur temporel à architecture éclatée.

La figure 2 présente un schéma fonctionnel relatif au commutateur de la figure 1.

La figure 3 présente un schéma d'un module de raccordement selon l'invention.

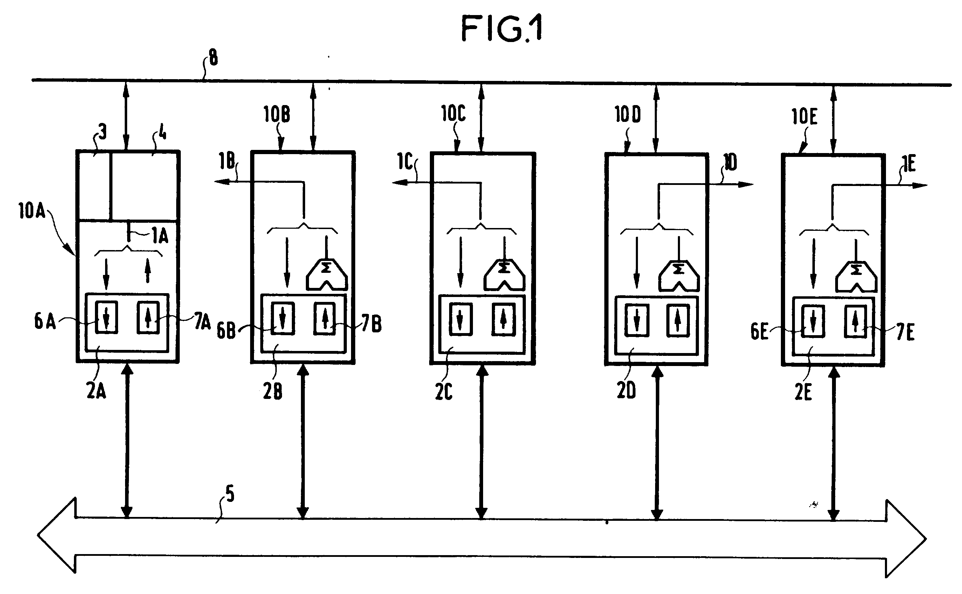

Le système présenté en figure 1 correspond par exemple à un commutateur numérique pour installation téléphonique de type privé, il est supposé desservir des équipements téléphoniques raccordés au commutateur par l'intermédiaire de diverses liaisons de transmission numériques ou numérisées à l'arrivée qui sont référencées 1A à 1E sur la figure 1.

Certaines de ces liaisons sont par exemple des liaisons multiplexes temporelles normalisées respectant la recommandation G.704 évoquée plus haut, d'autres sont éventuellement des liaisons multiplexes temporelles ayant une structure de trame différente.

Chaque liaison est destinée à desservir un équipement, par exemple un joncteur d'un commutateur distant ou encore un agencement de commande local, elle aboutit à un module de raccordement dans le commutateur temporel local ici présenté.

Ainsi, la liaison multiplexe temporelle 1A présentée en figure 1 est supposée relier un module de raccordement local 2A à l'agencement de commande du commutateur temporel local, cet agencement de commande étant généralement organisé de manière classique autour d'au moins un processeur 3 et d'une horloge locale 4.

Les autres liaisons multiplexes temporelles référencées 1B à 1E sont ici supposées relier des modules de raccordement locaux référencés 2B à 2E à des modules de raccordement complémentaires et le plus souvent distants des équipements desservis, ces modules complémentaires et les équipements desservis n'étant pas représentés ici.

Tous les modules de raccordement locaux 2A à 2E sont connectés à une même liaison multiplexe temporelle, de type bus bidirectionnel, dite bus de données et référencée 5, de manière à permettre un échange de données par ce bus de données 5 entre les équipements qu'il dessert respectivement.

A cet effet, le bus de données 5 est géré par une structure de commande qui est ici constituée par l'agencement de commande évoqué ci-dessus dont on a vu qu'il était organisé autour d'au moins un processeur 3 et d'une horloge 4, étant entendu que d'autres structures connues, non décrites ici, sont également susceptibles d'être mise en oeuvre.

Le bus de données 5 de type synchrone est multifilaire et assure une transmission simultanée de plusieurs bits d'une même information soit ici les bits d'un même octet.

Ce bus de données supporte une structure de trame permettant l'obtention d'un grand nombre de canaux isochrones, par exemple une structure selon laquelle chaque trame périodique de 125 µS est divisée en 256 intervalles de temps et permet l'usage d'autant de canaux isochrones soit en conséquence la desserte d'une pluralité de modules de raccordement raccordés à leurs équipements respectifs par des liaisons multiplexes temporelles supportant des structures de trame dont le nombre de canaux est très inférieur à ici 256, par exemple 32 par liaison.

Les données numériques destinées à être échangées par les équipements desservis au travers du bus de données 5 sont transmis par les modules de raccordement locaux 2A à 2E concernés, ces derniers comportent à cet effet deux mémoires associatives reliées d'une part au bus de données 5, d'autre part à la liaison multiplexe aboutissant au module de raccordement considéré, telle les mémoires associatives 6A et 7A reliées tant au bus de données 5 qu'à la liaison 1A pour le module de raccordement 2A.

Comme indiqué ci-dessus, c'est l'agencement de commande, ici supposé organisé autour du processeur 3 et de l'horloge 4, qui assurent la gestion du commutateur temporel à architecture éclatée que constituent le bus de données 5 et les modules de raccordement 2A à 2E.

A cet effet le processeur 3 est relié par un bus auxiliaire de signalisation 8 à chacun des modules de raccordement 2B à 2E, reliés au bus de données 5 et dits locaux, par exemple au travers de la logique de commande 9B à 9E associée à chaque module de raccordement 2B à 2E dans l'unité locale 10B à 10E dont ce module fait partie.

Le processeur 3 assure ici l'affectation dynamique des canaux temporels et par conséquent des intervalles de temps correspondants aux différents modules de raccordement sur le bus de données 5 en fonction des besoins, alors que l'horloge 4 fournit, de manière connue de l'homme de métier, les signaux de temps correspondants.

L'établissement d'une communication entre une unité locale telle que 10B et une autre unité locale telle que 10E implique l'envoi d'un demande de communication par la logique 9B de l'unité locale demanderesse au processeur 3 via le bus auxiliaire de signalisation 8.

Le processeur 3 attribue temporairement un ou plusieurs canaux isochrones du bus de données 5 au module de raccordement 1B pour ses émissions au travers de sa mémoire associative 6B en fonction d'une table de configuration où sont enregistrés les besoins nominaux en matière de canaux à l'émission de tous les modules de raccordement et en fonction des canaux, c'est-à-dire des intervalles de temps sur le bus de données 5 qui sont alors occupés pour émission par d'autres modules de raccordement.

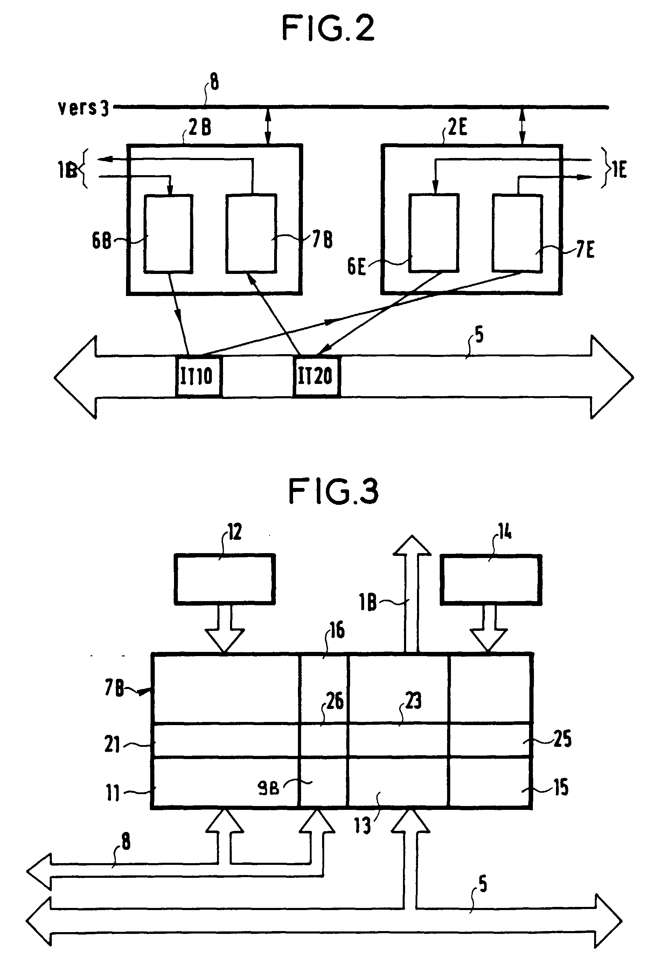

Le ou les canaux réservés à l'émission pour le module de raccordement 5B via sa mémoire associative 6B, tel le canal correspondant à l'intervalle de temps référencé IT10 sur la figure 2, est ou sont également indiqués au module de raccordement 2E récepteur par le processeur 3 pour réception des données correspondantes, via la mémoire associative 7E.

Les mêmes opérations sont entreprises pour signaler au module de raccordement 2E et au module de raccordement 2B les intervalles de temps affectés aux émissions du premier nommé vers le second, tel l'intervalle de temps IT20 sur la figure 2, via les mémoires associatives respectives 6E et 7B de ces modules.

Un exemple de mémoire associative 7, telle 7B, pour module de raccordement selon l'invention est présenté en figure 2, il est destiné à assurer les transferts de données transmises par le bus de données 5, auquel cette mémoire associative est reliée, vers la liaison multiplexe temporelle particulière 1, telle 1B, reliant le module de raccordement considéré à l'équipement qu'il dessert.

A cet effet, la mémoire associative 7B comporte une unité de sélection d'intervalles 11 essentiellement constituée par un plan de "n" registres comparateurs, tels que le registre 21 ici seul figuré, qui sont destinés à détecter l'occurrence d'intervalles de temps déterminés au cours des trames identiques successivement en vigueur sur le bus de données 5.

L'unité de sélection 11 est reliée au processeur 3 par le bus auxiliaire de signalisation 8 et elle reçoit de ce processeur la ou les indications relatives aux intervalles de temps affectés à un module de raccordement entrant en raccordement avec le module de communication qui la comporte par l'intermédiaire du bus de données 5.

Cette ou ces indications d'intervalles de temps sont sauvegardées pour la durée de la communication dans un registre comparateur 21 de l'unité 11.

Un compteur 12 et un décodeur non représenté sont associés à la mémoire associative 7B pour balayer cycliquement l'ensemble des indications d'intervalle de temps pour la trame en vigueur sur le bus de données 5, il est synchronisé à cet effet par les signaux d'horloge fournis par l'horloge 4 qui régit ce bus.

Chacun des registres 21 de l'unité de sélection 11 qui contient une indication d'intervalle de temps compare les indications successivement fournies par le compteur 12 avec cette indication qu'il mémorise de manière à permettre la saisie par le module de raccordement 2B des données transmises à l'intention de ce module sur le bus de données 5 pendant l'intervalle de temps indiqué.

A cet effet, la mémoire associative 7B comporte une unité tampon de données 13 composée elle aussi de "n" registres 23 aptes à mémoriser chacun au moins les données transmises par le bus de données à destination d'un module de raccordement au cours d'un intervalle de temps, soit par exemple un octet.

Chacun des registres 23 de l'unité tampon de données 13 est relié au bus de données 5 par ses entrées de données et est activé en écriture par l'un des registres 21 de l'unité de sélection 11 à détection par ce dernier de l'arrivée de l'intervalle de temps qui lui a été spécifiquement indiqué par le processeur 3.

Un second compteur 14 pilote la lecture des données contenues dans l'unité tampon 13, en association avec une seconde unité de sélection d'intervalles de temps 15, d'une manière analogue à celle évoquée pour le compteur 12 et la première unité de sélection 11 de la mémoire associative 7B considérée.

Le compteur 14 est piloté par les signaux d'horloge en vigueur sur la liaison multiplexe particulière 1B desservie qui sont obtenus par l'intermédiaire d'un dispositif de récupération d'horloge usuel et non représenté.

La seconde unité de sélection d'intervalles 15 est identique à la première et comporte donc un plan de "n" registres comparateurs 25, dont un seul est ici différencié, ces registres 25 sont destinés à détecter l'occurrence d'intervalles de temps déterminés au cours des trames identiques successivement en vigueur sur le la liaison multiplexe temporelle particulière 1B.

La seconde unité de sélection 15 est reliée au processeur 3 par le bus auxiliaire de signalisation 8 et elle reçoit de ce processeur la ou les indications relatives aux intervalles de temps affectés à l'équipement desservi sur la liaison multiplexe 1B pour chacune de ses communication avec le module de raccordement qui comporte cette unité de sélection 15.

Cette ou ces indications d'intervalles de temps sont sauvegardées pour la durée de la communication chacune dans un registre comparateur 25 de l'unité 15.

Le fonctionnement de l'ensemble formé par une unité de sélection 15 et un compteur 14 associé dans la même mémoire associative est semblable à celui d'un ensemble formé par une unité de sélection 11 et le compteur 12 associé,il n'est donc pas répété ici.

Une unité tampon de commande 16 est également incluse dans la mémoire associative 7B, elle comporte "n" registres de commande, dont un seul est ici différencié, ces registres sont individuellement associés aux registres de l'unité tampon de données 13 de même que les registres des unités de sélection 11 et 15.

Chaque registre de l'unité 16 est relié au processeur 3 par l'intermédiaire du bus auxiliaire de signalisation 8 de manière à recevoir des indications de commande indiquant les opérations à effectuer au niveau du registre correspondant de l'unité tampon de données.

Ces commandes permettent par exemple au processeur 3 d'inscrire, dans les registres tampons de commande 25 concernés, des ordres de connexion ou de déconnexion concernant les canaux correspondants de la liaison multiplexe particulière 1B.

De manière classique dans le domaine, le fonctionnement d'une mémoire associative telle que 6B se déduit aisément de celui de la mémoire associative 7B correspondante du même module de raccordement 2B, puisque l'inversion des sens de transmission des données transmises par ces mémoires identiques ne conduit pratiquement qu'à une inversion des processus opératoires.

## Revendications

1. Commutateur temporel comportant un bus de données (5) dont l'exploitation synchrone est temporellement partagée entre des modules de raccordement (2A à 2E) d'équipement qui sont reliés à ce bus de données et qui sont de type à mémoire associative programmée, de manière à d'une part émettre et d'autre part recevoir des données selon des structures différentes de trame au cours d'intervalles de temps, définis en nombre et positions temporelles, sur le bus de données et sur une liaison multiplexe temporelle particulière (1A à 1E) reliant le module de raccordement considéré à l'équipement qu'il dessert, ledit commutateur étant caractérisé en ce que chaque module de raccordement (2B) d'équipement est doté de deux mémoires associatives (6B, 7B) respectivement destinées l'une aux émissions de la liaison multiplexe temporelle particulière (1B), desservie par le module considéré, vers le bus de données (5) et l'autre aux émissions en sens inverse, chacune de ces mémoires associatives comportant identiquement deux unités de sélection d'intervalles de temps (11, 15) qui sont instruites, via un bus auxiliaire de signalisation (8), par un agencement de commande de type connu associant au moins un processeur (3) et une horloge (4) pour le pilotage du commutateur, et qui sont actionnées chacune par un compteur différent (12, 14), le compteur de l'une étant piloté par les signaux d'horloge en vigueur sur le bus de données, alors que le compteur de l'autre est piloté par les signaux d'horloge en vigueur sur la liaison particulière desservie, chaque mémoire associative comportant de plus une unité tampon de données (13) insérée entre la liaison particulière desservie et le bus de données et sélectivement commandée par chacune des unités de sélection de cette mémoire associative, soit en écriture, soit en lecture suivant le sens d'émission considéré.

2. Commutateur temporel, selon la revendication 1, caractérisé en ce que chaque mémoire associative comporte de plus une unité tampon de commande (16) instruite par l'agencement de commande du commutateur et associée à l'unité tampon de données pour mémoriser des commandes relatives aux canaux correspondants aux intervalles de temps sélectionnés.

3. Commutateur temporel, selon la revendication 2, caractérisé en ce que les deux unités de sélection d'intervalle de temps (11, 15), l'unité tampon de commande (16) et l'unité tampon de données (13) de chacune des deux mémoires associatives (6B, 7B) d'un même module de raccordement (2B) comportent un même nombre de registres (21, 23, 25, 26) au moins égal au nombre d'intervalles de temps de la trame régissant la liaison particulière (1B) desservie par le module de raccordement considéré (2B).

4. Commutateur temporel, selon au moins l'une des revendications 1 à 3, caractérisé en ce que chaque unité de sélection d'intervalles (11 ou 15) des deux mémoires associatives (6B, 7B) d'un module de raccordement (2B) comporte un nombre de registres comparateurs (21, 25) au moins égal au nombre d'intervalles de temps de la trame régissant la liaison particulière (1B) desservie par ce module de raccordement (2B), chacun de ces registres comparateurs étant destiné à détecter l'occurrence d'un intervalle de temps de rang déterminé au cours des trames identiques successivement en vigueur soit sur le bus de données, soit sur la liaison particulière desservie (1B), par comparaison des indications fournies par un compteur (12 ou 14) synchronisé par les signaux d'horloge en vigueur soit sur le bus de données(5), soit sur la liaison particulière, avec une indication correspondante enregistrée dans ce registre comparateur par l'agencement de commande du commutateur temporel, via un bus de signalisation (8).

5. Commutateur temporel, selon la revendication 1, caractérisé en ce qu'il comporte un agencement de commande (3, 4) qui est relié au bus de données (5) commun par un module de raccordement (2A) identique à ceux des autres modules de raccordement d'équipement.

6. Module de raccordement d'un équipement à une liaison temporelle formant un bus de données (5), organisée selon une première structure de trame et partagée en une pluralité de modules de raccordement (2A à 2E) identiques ou similaires desservant des équipements par des liaisons multiplexes temporelles individuelles (1A à 1E) dont la structure de trame différe de ladite première structure, l'exploitation de ce bus de données étant supervisée par une structure de commande composée d'au moins un processeur (3) et d'une horloge (4), caractérisé en ce qu'il comporte deux mémoires associatives (6B, 7B) respectivement destinées l'une aux émissions du module vers le bus de données et l'autre aux émissions vers ledit module au travers de ce bus de données, ces deux mémoires comportant chacune et identiquement deux unités de sélection d'intervalles de temps (11, 15) instruites par l'agencement de commande et actionnées chacune par un compteur différent (12, 14) qui est piloté par les signaux d'horloge en vigueur sur le bus de données pour l'une et par les signaux d'horloge en vigueur sur la liaison particulière desservie pour l'autre, ainsi qu'une unité tampon de données (13) insérée entre la liaison particulière desservie et le bus de données et sélectivement commandée par chaque unité de sélection, soit en écriture, soit en lecture suivant le sens d'émission considéré.

7. Module de raccordement, selon la revendication 6, caractérisé en ce que chaque mémoire associative comporte de plus une unité tampon de commande (16) instruite par l'agencement de commande du commutateur et associée à l'unité tampon de données pour mémoriser des commandes relatives aux canaux correspondants aux intervalles de temps sélectionnés.

8. Module de raccordement, selon la revendication 7, caractérisé en ce que les deux unités de sélection d'intervalle de temps (11, 15), l'unité tampon de commande (16) et l'unité tampon de données (13) de chacune des deux mémoires associatives (6B, 7B) du module comportent un même nombre de registres (21, 23, 25, 26) au moins égal au nombre d'intervalles de temps de la trame régissant la liaison particulière (1B) desservie par le module.

9. Module de raccordement, selon au moins l'une des revendications 6 à 8, caractérisé en ce que chaque unité de sélection d'intervalles (11 ou) des deux mémoires associatives (6B, 7B) du module comporte un nombre de registres comparateurs (21, 25) qui est au moins égal au nombre d'intervalles de temps de la trame régissant la liaison particulière (1B) desservie par ce module, chacun de ces registres comparateurs étant destiné à détecter l'occurrence d'un intervalle de temps de rang déterminé au cours des trames identiques successivement en vigueur soit sur le bus de données, soit sur la liaison particulière desservie, par comparaison des indications fournies par un compteur (12 ou 14) synchronisé par les signaux d'horloge en vigueur soit sur le bus de données (5), soit sur la liaison particulière (1B), avec une indication correspondante enregistrée dans ce registre comparateur par l'agencement de commande (3, 4).

## Patentansprüche

1. Zeitmultiplexschalter mit einem Datenbus (5), dessen synchroner Betrieb zeitlich zwischen Anschlußmoduln (2A bis 2E) der Einrichtung aufgeteilt ist, die an diesen Datenbus angeschlossen sind und die einen programmierten Assoziativspeicher besitzen, so daß Daten gemäß unterschiedlichen Rahmenstrukturen während Zeitintervallen die nach Zahl und Zeitlage definiert sind, auf dem Datenbus und einer besonderen Zeitmultiplexverbindung (1A bis 1E) ausgesendet und empfangen werden, die den betreffenden Anschlußmodul mit der von ihm bedienten Einrichtung verbindet, wobei der Schalter dadurch gekennzeichnet ist, daß jeder Anschlußmodul (2B) einer Einrichtung zwei Assoziativspeicher (6B, 7B) enthält, von denen der eine für die Aussendung von der von dem betreffenden Modul bedienten besonderen Zeitmultiplexverbindung (1B) zum Datenbus (5) und der andere für die Aussendung in umgekehrter Richtung bestimmt ist, wobei jeder dieser Assoziativspeicher identisch zwei Zeitintervall-Auswahleinheiten (11, 15) enthält, die über einen Signalisierungs-Hilfsbus (8) von einer bekannten Steuereinrichtung instruiert werden, die mindestens einen Prozessor (3) und einen Taktgeber (4) zur Steuerung des Schalters enthält, wobei die beiden Zeitintervall-Auswahleinheiten je von einem anderen Zähler (12, 14) betätigt werden, von denen der eine durch die auf dem Datenbus gültigen Taktsignale gesteuert wird, während der andere durch die auf der bedienten besonderen Verbindung geltenden Taktsignale gesteuert wird, wobei jeder Assoziativspeicher außerdem eine Datenpuffereinheit (13) zwischen der bedienten besonderen Verbindung und dem Datenbus enthält und selektiv durch jede der Auswahleinheiten dieses Assoziativspeichers entweder in Schreibrichtung oder in Leserichtung je nach der Datenübertragungsrichtung gesteuert wird.

2. Zeitmultiplexschalter nach Anspruch 1, dadurch gekennzeichnet, daß jeder Assoziativspeicher außerdem eine Steuerpuffereinheit (16) enthält, die durch die Steuereinrichtung des Zeitmultiplexschalters instruiert wird und der Datenpuffereinheit zugeordnet ist, um Steuerbefehle bezüglich der den ausgewählten Zeitintervallen entsprechenden Kanäle zu speichern.

3. Zeitmultiplexschalter nach Anspruch 2, dadurch gekennzeichnet, daß die beiden Zeitintervall-Auswahleinheiten (11, 15), die Steuerpuffereinheit (16) und die Datenpuffereinheit (13) jedes der beiden Assoziativspeicher (6B, 7B) eines gemeinsamen Anschlußmoduls (2B) eine gleiche Anzahl von Registern (21, 23, 25, 26) besitzen, die mindestens der Anzahl von Zeitintervallen des Rahmens gleicht, der die vom betreffenden Anschlußmodul (2B) bediente besondere Verbindung (1B) beherrscht.

4. Zeitmultiplexschalter nach mindestens einem der Ansprüche 1 bis 3, dadurch gekennzeichnet, daß jede Zeitintervall-Auswahleinheit (11 oder 15) der beiden Assoziativspeicher (6B, 7B) eines Anschlußmoduls (2B) eine Anzahl von Vergleichsregistern (21, 25) aufweist, die mindestens der Anzahl von Zeitintervallen des die durch diesen Anschlußmodul (2B) bediente besondere Verbindung (1B) beherrschenden Rahmens gleicht, wobei jedes dieser Vergleichsregister das Auftreten eines Zeitintervalls eines bestimmten Zeitrangs während der aufeinanderfolgenden identischen Rahmen erfassen soll, die auf dem Datenbus oder auf der besonderen bedienten Verbindung (1B) gelten, und zwar durch Vergleich der von einem durch die entweder auf dem Datenbus (5) oder auf der besonderen Verbindung geltenden Taktsignale synchronisierten Zähler (12 oder 14) gelieferten Angaben, mit einer entsprechenden Angabe, die in diesem Vergleichsregister durch die Steuereinrichtung des Zeitmultiplexschalters über einen Signalisierungsbus (8) eingetragen wurde.

5. Zeitmultiplexschalter nach Anspruch 1, dadurch gekennzeichnet, daß er eine Steuereinrichtung (3, 4) enthält, die mit dem gemeinsamen Datenbus (5) über einen Anschlußmodul (2A) verbunden ist, der den anderen Anschlußmoduln der Einrichtung gleicht.

6. Anschlußmodul für eine Anlage mit einer Zeitmultiplexverbindung, die einen Datenbus (5) bildet, der gemäß einer ersten Rahmenstruktur organisiert ist und auf eine Mehrzahl von gleichen oder ähnlichen Anschlußmoduln (2A bis 2E) aufgeteilt ist, deren Rahmenstruktur sich von der der ersten Struktur unterscheidet, wobei der Betrieb auf dieser Datenbusleitung durch eine Steuerstruktur überwacht wird, die mindestens einen Prozessor (3) und einen Taktgeber (4) enthält, dadurch gekennzeichnet, daß er zwei Assoziativspeicher (6B, 7B) enthält, von denen der eine für die Aussendung vom Modul zum Datenbus und der andere für die Aussendung zum Modul über diesen Datenbus bestimmt ist, wobei die beiden Speicher je in gleicher Weise zwei Zeitintervall-Auswahleinheiten (11, 15) enthalten, die von der Steuereinrichtung instruiert und je von einem anderen Zähler (12, 14) betätigt werden, der von dem auf dem Datenbus bzw. der bedienten besonderen Verbindung gültigen Taktsignal gesteuert wird, und wobei weiter eine Datenpuffereinheit (13) zwischen die bediente besondere Verbindung und den Datenbus eingefügt und selektiv durch die Auswahleinheit entweder in Schreibrichtung oder in Leserichtung je nach der betreffenden Senderichtung gesteuert wird.

7. Anschlußmodul nach Anspruch 6, dadurch gekennzeichnet, daß jeder Assoziativspeicher außerdem eine Steuerpuffereinheit (16) enthält, die von der Steuereinrichtung des Zeitmultiplexschalters instruiert wird und einer Datenpuffereinheit zugeordnet ist, um Befehle bezüglich der den ausgewählten Zeitintervallen entsprechenden Kanäle zu speichern.

8. Anschlußmodul nach Anspruch 7, dadurch gekennzeichnet, daß die beiden Zeitintervall-Auswahleinheiten (11, 15), die Steuerpuffereinheit (16) und die Datenpuffereinheit (13) jedes der beiden Assoziativspeicher (6B, 7B) des Moduls Register (21, 23, 25, 26) in einer gleichen Anzahl besitzen, die der Anzahl von Zeitintervallen des auf der von dem Modul bedienten besonderen Verbindung (1B) geltenden Rahmens gleicht.

9. Anschlußmodul nach mindestens einem der Ansprüche 6 bis 8, dadurch gekennzeichnet, daß jede Zeitintervall-Auswahleinheit (11 oder 15) der beiden Assoziativspeicher (6B, 7B) des Moduls eine Anzahl von Vergleichsregistern (21, 25) besitzt, die mindestens der Anzahl von Zeitintervallen des auf der von diesem Modul bedienten besonderen Verbindung (1B) geltenden Rahmens gleicht, wobei jedes dieser Vergleichsregister dazu bestimmt ist, das Auftreten eines Zeitintervalls eines bestimmten Rangs während der aufeinanderfolgenden identischen Zeitintervalle zu erfassen, die auf dem Datenbus bzw. der bedienten besonderen Verbindung gelten, und zwar durch Vergleich der von einem Zähler (12 oder 14) gelieferten Angaben, der von den entweder auf dem Datenbus (5) oder auf der besonderen Verbindung (1B) geltenden Taktsignalen synchronisiert ist, mit einer entsprechenden Angabe, die in diesem Vergleichsregister durch die Steuereinrichtung (3, 4) eingetragen ist.

## Claims

1. Time-division switch under the control of a control arrangement in which at least one processor (3) and a clock (4) are associated, including a data bus (5) synchronous operation of which is time-shared between equipment access modules (2A to 2E) which are connected to the data bus and which are of the content-addressable memory type programmed to send and to receive data with different frame structures during time slots the number and temporal positions of which are defined on the data bus and on a particular time-division multiplex link (1A to 1E) linking the equipment access module concerned to the equipment it serves, the switch being characterised in that each equipment access module (2B) has two content-addressable memories (6B, 7B) one of which is adapted to send on the particular time-division multiplex link (1B) served by the module concerned to the data bus (5) and the other of which is adapted to send in the opposite direction each content-addressable memory including, in identical fashion, two time slot selection units (11, 15) which are under the control of a control arrangement known in itself and including at least a processor (3) and a clock (4) for controlling the switch, via an auxiliary signalling bus (8), and each operated by a different counter (12, 14) respectively clocked by the clock signals currently in use on the data bus in the case of one of them and by the clock signals currently in use on the particular link being served in the case of the other of them, each content-addressable memory further including a data buffer unit (13) inserted between the particular link being served and the data bus and selectively controlled by each selection unit of the content-addressable memory, either in write mode or in read mode, depending on the relevant direction of sending.

2. Time-division switch according to claim 1 characterised in that each content-addressable memory further includes a control buffer unit (16) which is under the control of the control arrangement of the switch and is associated with the data buffer unit in order to store control information relating to the channels which correspond to the selected time slots.

3. Time-division switch according to claim 2 characterised in that the two time slot selection units (11, 15), the control buffer unit (16) and the data buffer unit (13) of each of the two content-addressable memories (6B, 7B) of a given equipment access module (2B) include the same number of registers (21, 23, 25, 26) which is at least equal to the number of time slots of the frame governing the particular link (1B) served by the equipment access module (2B) concerned.

4. Time-division switch according to at least one of claims 1 to 3 characterised in that each time slot selection unit (11 or 15) of the two content-addressable memories (6B, 7B) of an equipment connection module (2B) includes comparator registers (21, 25) the number of which is at least equal to the number of time slots in the frame that governs the particular link (1B) served by this equipment access module (2B), each of the comparator registers being adapted to detect occurrence of a time slot of a determined rank during successive identical frames present either on the data bus or on the particular link (1B) being served by comparing indications supplied by a counter (12 or 14) synchronised by the clock signals currently being used either on the data bus (5) or on the particular link with a corresponding indication stored in the comparator register by the control arrangement of the time-division switch via a signalling bus (8).

5. Time-division switch according to claim 1 characterised in that it includes a control arrangement (3, 4) which is linked to the common data bus (5) by an access module (2A) which is identical the other equipment access modules.

6. Module for connecting an item of equipment to a time-division multiplex link forming a data bus (5) organised in accordance with a first frame structure and shared between a plurality of identical or similar equipment access modules (2A to 2E) serving items of equipment by means of individual time-division multiplex links (1A to 1E) the frame structure of which is different from the first structure, synchronous operation of this data bus being supervised by a control structure comprising at least a processor (3) and a clock (4), characterised in that it includes two content-addressable memories (6B, 7B) respectively adapted to send from the module to the data bus and to send to the module via the data bus, the two memories each including, in an identical fashion, two time slot selection units (11, 15) which are under the control of the control arrangement and each operated by a different counter (12, 14) respectively controlled by the clock signals currently in use on the data bus and by the clock signals currently in use on the particular link being served, as well as a data buffer unit (13) inserted between the particular link being served and the data bus and selectively controlled by each selection unit either in write mode or in read mode depending on the relevant direction of sending.

7. Connection module according to claim 6 characterised in that each content-addressable memory further includes a control buffer unit (16) which is under the control of the control arrangement of the switch and is associated with the data buffer unit in order to store control information relating to the channels which correspond to the selected time slots.

8. Connection module according to claim 7 characterised in that the two time slot selection units (11, 15), the control buffer unit (16) and the data buffer unit (13) of each of the two content-addressable memories (6B, 7B) of the module include the same number of registers (21, 23, 25, 26) which is at least equal to the number of time slots of the frame governing the particular link (1B) served by the module.

9. Connection module according to at least one of claims 6 to 8 characterised in that each time slot selection unit (11 or 15) of the two content-addressable memories (6B, 7B) of the module include comparator registers (21, 25) the number of which is at least equal to the number of time slots in the frame that governs the particular link (1B) served by this module, each of the comparator registers being adapted to detect occurrence of a time slot of a determined rank during successive identical frames present either on the data bus or on the particular link being served by comparing indications supplied by a counter (12 or 14) synchronised by the clock signals currently in use either on the data bus (5) or on the particular link (1B) with a corresponding indication stored in the comparator register by the control arrangement (3, 4).
